# EUROPEAN PATENT APPLICATION

(11) **EP 4 279 468 A1**
(43) Date of publication of application: **22.11.2023**
(21) Application number: 22305723.3
(22) Date of filing: 16.05.2022
(51) Int. Cl.: C04B 28/06, C04B 28/16

(54) **BINDER BASED ON GROUND GRANULATED BLAST FURNACE SLAG**

(71) Applicant: Ecocem Materials Limited, Dublin 3 D03E0C0 (IE); Centre National de la Recherche Scientifique (CNRS), 75016 Paris (FR); Ecole Normale Supérieure Paris-Saclay, 91190 Gif-sur-Yvette (FR)
(72) Inventor: KACI, Yasmine, 75012 Paris (FR); ALFANI, Roberta, D03 E0CO Dublin (IE); FROUIN, Laurent, 75012 Paris (FR); WATTEZ, Thomas, 75012 Paris (FR); CHAOUCHE, Mohend, 91190 Gif Sur Yvette (FR)
(74) Representative: Plasseraud IP

(57) **Abstract**

The invention concerns an ettringitic and stratlingitic binder composition comprising:
A) Crystaline calcium aluminate Cement (CAC),
B) Ground Granulated Blast Furnace Slag (GGBS), and
C) Sulfate source selected from the group consisting of Anhydrite calcium sulfate (AC$) and/or alkali sulfate (A$).

## Description

### Technical Field

This disclosure pertains to the field of hydraulic binder compositions comprising Ground Granulated Blast Furnace Slag (GGBS) for preparing industrial mortars and concrete. In particular, the technical field of the invention relates to hydraulic mineral binders including Ground Granulated Blast Furnace Slag (GGBS or slag), which are used in compositions able to set and harden, such as mortar or concrete compositions.

The invention concerns also the methods of preparation of these hydraulic binder compositions and of these mortar or concrete compositions able to set and harden

### Background Art

Portland cement is historically the main and most spread active component in traditional binder compositions used in concrete or mortar formulations.

Portland cement production has a strong and negative impact on the environment due to the emissions of large quantities of carbon dioxide. The production of cement inherently generates CO₂ during the calcination of the raw materials at very high temperature (1450°C) in a kiln through decarbonation of the limestone (Eq. (1)):

CaCO₃ (s) → CaO (s) + CO₂ (g) (Eq. (1))

In addition, carbon dioxide is released as a result of the combustion of the fossil fuels needed to heat the cement kiln. By adding the additional emissions of grinding, almost one ton of CO₂ per ton of Portland cement is obtained. Overall, the cement industry is responsible for about 7 to 9% of the global carbon dioxide emissions.

Moreover, handling Portland cement may lead to health issues (such as allergy) due in particular to its high alkalinity (pH higher than 13). In addition, hazardous elements as hexavalent Chromium (Cr (VI)) may be released upon kneading, which is also unhealthy for the workers when it gets in contact with the skin. Although Cr (VI) reducing agents (as ferrous sulfate) are normally included in the cement powder, their efficiency is limited in time. Building workers, in particular those in the third world, are not expected to often check the deadline related to such treatments.

Most current research on new binders aims to replace cement in various applications by binders with lower environmental impact. One route is through using resources without their expensive treatment, such as by-products from other industries (waste for one industry, but primary resource for others). This is the case of blast-furnace slag which is a by-product of iron industry. By grinding this product into fine powder (GGBS) one can obtain a cementitious material that can be used in partial substitution of cement or used alone by adding some chemical activators.

It is important to note that the use of a GGBS is not only environmentally-friendly but also leads to several enhanced properties when it's used to formulate mortars, such as high resistance to sulfate attack, low permeability, good resistance in a chemically aggressive environment, low heat of hydration (required in massive structures), excellent durability in general, possibility of immobilization of heavy metals or radionuclides, etc.

Some typical concretes and mortars are based on ternary systems comprising Ordinary Portland Cement, aluminous cement and sulfates. In these ternary systems ettringite is formed from the first moments until the sulfates are consumed.

Bizzozero's thesis (J. Bizzozero, « Hydration and dimensional stability of calcium aluminate cement based systems », Infoscience, 2014. https://infoscience.epfl.ch/record/202031) disclosesthat in ternary systems based on GGBS, aluminous cement and sulfate only ettringite precipitates is formed.

However, in ternary binders based on GGBS, aluminous cement and sulfate, it would be better that the hydration pattern, leading to optimized final performances, includes formation of both ettringite and stratlingite. Indeed, ettringite formation leads to early ages mechanical performance and stratlingite formation leads to a GGBS hydration which leads to long term mechanical performance and enhanced durability.

### Summary

The above objectives are reached thanks to an ettringitic and stratlingitic binder composition comprising:
A) Crystalline calcium aluminate Cement (CAC),
B) Ground Granulated Blast Furnace Slag (GGBS) according to EN 15167,
C) Sulfate source selected from the group consisting of Anhydrite calcium sulfate (AC$) and/or alkali sulfate.

The invention also concerns dry industrial concrete or mortar composition, in particular tile adhesive, repair mortars, screeds and mortars for floor covering comprising at least one aggregate and the binder composition mentioned above.

The invention is also directed to wet industrial mortar composition in particular tile adhesive, repair mortars, screeds and mortars for floor covering comprising at least one aggregate, the binder composition mentioned above and water.

The invention further concerns hardened industrial concrete or mortar composition obtained from the wet concrete or industrial mortar composition mentioned above.

The invention is in addition directed to process for preparing the wet industrial concrete or mortar composition mentioned above comprising a step of mixing with water, at least one aggregate and the binder composition mentioned above, the binder composition being prepared before the mixing step or in situ during the mixing step from at least some of the different components of the binder composition taken separately and/or under the form of premix(es).

### Definitions

According to the terminology of this text, the following non limitative definitions have to be taken into consideration:

"slag" denotes a stony by-product matter separated from metals during the smelting or refining of ore.

"GGBS" or "GGBFS": Ground Granulated Blast Furnace Slag, which is equivalent to blast furnace slag, Granulated Blast Furnace Slag (GBFS), blast furnace water-crushed slag powder and blast furnace slag fine aggregate.

"cement" is understood as meaning a powdery substance made for use in making mortar. It is a mineral binder, possibly free from any organic compound.

"binder" refers to "hydraulic binder" meaning any material that hardens just by adding water, like GGBS and cement.

"mortar" refers to a material composed of binder(s), aggregates such as sand and other components, like admixtures.

"d₅₀" gives the median size of the granulometric distribution of material's particles (usually in micrometres for cementitious materials). It means that 50% of the particles have a size less than the specified number and 50% of the particles have a size greater than the given number. The measurement of d50 is done by Laser diffraction analysis, also known as Laser diffraction spectroscopy, by means of Laser diffraction analyzer such as "Mastersizer 2000" and commercialized by the MALVERN company, with the humid way method.

### Brief Description of Drawings

Figures 1, 2 and 3 are diagrams showing the normalized heat flow of binder compositions.
Figures 4, 5, 6 and 7 are X-ray diffraction spectrum of binder compositions.

### Detailed description

### The ettringitic and stralingitic binder composition

The invention concerns an ettringitic and stratlingitic binder composition comprising:
A) Crystaline calcium aluminate Cement (CAC),
B) Ground Granulated Blast Furnace Slag (GGBS), and
C) Sulfate source selected from the group consisting of Anhydrite calcium sulfate (AC$) and/or alkali sulfate (A$).

The binder composition according to the invention is qualified as ettringitic and stralingitic, since, the binder composition, according to the invention, once mix with water is able to form both ettringite and stratlingite when hardening. Thus, the resulting hardened mortar or concrete comprises at least ettringite and stratlingite phases.

Ettringite is a natural mineral that is formed during the first ages of cement hydration. It is derived from co-precipitation of hydroxylated AI and Ca species. The net positive charge of the double hydroxide sites is neutralized by sulfate adsorption. It is in the form of positively charged columns between which we find sulfates and water. The stability of the structure is therefore not only ensured by strong bonds (covalent and ionic), but also by hydrogen bonds. During Portland Cement hydration, ettringite formed at early ages, is consumed along with CSH formation and precipitation. In classical Calcium Aluminate Cement (CAC) and Calcium SulphoAluminate cement (CSA) based binders, ettringite remains the most important phases along all the ages.

Stratlingite has the chemical formula: Ca₄Al₂(OH)₁₂[AlSi(OH)₈]₂-2H₂O. It is an AFm-type phase (associated anion is a silico-aluminate) which appears to be a hydration product of cement binders rich in both silicates and aluminates species.

In an embodiment, in the binder composition according to the invention, the quantity of CAC is between 5% dry wt and 60% dry wt advantageously between 10% dry wt and 55% dry wt, and more advantageously between 15% dry wt and 45% dry wt.

In an embodiment, in the binder composition according to the invention, the quantity of GGBS is between 5% dry wt and 95% dry wt, advantageously between 15% dry wt and 70% dry wt, and more advantageously between 30% dry wt and 65% dry wt.

In an embodiment, in the binder composition according to the invention, the quantity of AC$ is between 0,1 % dry wt and 30% dry wt, advantageously between 1% dry wt and 20% dry wt, and more advantageously between 5% dry wt and 15% dry wt.

In an embodiment, in the binder composition according to the invention, the quantity of A$ is between 0,1% dry wt and 5% dry wt, advantageously between 1% dry wt and 4.5% dry wt, and more advantageously between 2% dry wt and 4% dry wt.

Thus, in a preferred embodiment in the binder composition according to the invention, the quantity of GGBS is between 5% dry wt and 95% dry wt, advantageously between 15% dry wt and 70% dry wt, and more advantageously between 30% dry wt and 65% dry wt, the quantity of CAC is between 5% dry wt and 60% dry wt, advantageously between 10% dry wt and 55% dry wt and more advantageously between 15% dry wt and 45% dry wt , if present the quantity of AC$ is between 0,1 % dry wt and 30% dry wt, advantageously between 1% dry wt and 20% dry wt, and more advantageously between 5% dry wt and 15% dry wt and if present the quantity of A$ is between 0,1% dry wt and 5% dry wt, advantageously between 1% dry wt and 4.5% dry wt, and more advantageously between 2% dry wt and 4% dry wt.

The binder composition according to the invention does not need any of Ordinary Portland cement (OPC) to be able to react with water. Hence, in a particular embodiment the content of Ordinary Portland Cement is less than or equal to 1 dry wt%, preferably, the binder composition according to the invention does not contain Ordinary Portland Cement.

### The component A

CAC are cements comprising as the main component monocalcium aluminate (CaAl₂0₄, CaO.Al₂O₃) and as minor component calcium silicates or calcium aluminates. CAC may also contain mayenite.

CAC suitable for the ettringitic and stratlingitic binder composition according to the invention are crystalline CAC according to NF 14 647. In preferred embodiments, CAC is rich in monocalcium aluminate phase.

### The component B

GGBS is a glassy granular material obtained by quenching molten slag from a blast furnace in water, and then by finely grinding the quenched product to improve GGBS reactivity. GGBS is an amorphous alumino-silicate glass, essentially composed of SiO₂, CaO, MgO, and Al₂O₃. A number of glass network cation modifiers are present: Ca, Na, Mn, etc.

GGBS is preferably manufactured according to the European standard [NF EN 15167-1].

### The component C

The sulfate source of the ettringitic and stratlingitic binder composition according to the invention is selected from the group consisting of anhydrite calcium sulfate, alkali sulfate and mixtures thereof.

In preferred embodiments, the alkali sulfate is selected from the group consisting of sodium sulfate, lithium sulfate and potassium sulfate, preferably, the alkali sulfate is sodium sulfate.

Calcium sulfate is available under three forms. Indeed, calcium sulfate may be anhydrite, hemihydrate or dihydrate. The difference resides in molecule(s) of water bounded to calcium sulfate: anhydrite no water (CaSO₄), hemihydrate contains half molecule of water (CaSO₄. ½ H₂0), dihydrate, also known as gypsum, contains 2 molecules of water (CaSO₄. 2 H₂0). According to the invention, the calcium sulfate is anhydrite calcium sulfate.

Anhydrite calcium sulfate (CaSO₄) exists essentially in the three following forms:
- Soluble anhydrite (AIII): formed by heating the hemihydrate (CaSO₄.H₂O) at 140-200°C.
- Poorly soluble anhydrite (All): this is the form of natural anhydrite, it can also be produced by heating the hemihydrate for one hour at 900°C. No reaction is possible between All and water (to form gypsum) in the absence of an accelerating agent.
- High temperature anhydrite (AI): obtained by heating the All form to 1180°C. This form decomposes into calcium oxide (CaO, or "quicklime") and sulphur dioxide (SO₂) at temperatures above 1,450°C.

In particular embodiments, the calcium sulfate is micro A anhydrite obtained by a grinding and separation process, with an average diameter D50 of 10 µm.

### The dry industrial concrete or mortar composition

The invention also relates to dry industrial concrete or mortar compositions, in particular tile adhesive, repair mortars, screeds and mortars for floor covering comprising at least one aggregate and the binder composition described above. The dry mortar composition may eventually contain other admixtures and additions.

According to the invention, "dry" mortar compositions refer to compositions that are in the form of powder and ready to be mixed with water. In other words, the dry industrial concrete or mortar composition of the invention may content some moisture, but it essentially contains solid components which are intended to be mixed with water before its application.

Aggregates comprise a large category of particulate material used in construction, including sands, gravels, crushed stones, slag (not-granulated), recycled concrete and geosynthetic aggregates. They serve as reinforcement to add strength to the overall composite material.

Advantageously, said dry industrial concrete or mortar composition can also include, apart from aggregates, one or several optional ingredients, especially functional admixtures, additions and fibres, which can be the same as the other optional component mentioned above defined in the detailed description of the binder composition. In particular, these ingredients are chosen among additives selected from the group comprising filler, supplementary cementitious material, water reducing polymers, latex, water retention agent, rheological agent, defoamer/antifoams, biocide, pigment, flame retardant, air-entraining agents and retarders like the following compounds:

### • Water retention agent.

A water retention agent has the property to keep the water of mixing before the setting. The water is so trapped in the wet formulation paste which improves its bond. To some extent, the water is less absorbed by the support.

The water retentive agent is preferably chosen in the group comprising: modified celluloses, modified guars, modified cellulose ethers and/or guar ether and their mixes, more preferably consisting of: methylcelluloses, methylhydroxypropylcelluloses, methylhydroxyethyl-celluloses and their mixes.

### • Rheological agent

The possible rheological agent (also named a "thickener") is preferably chosen in the group comprising, more preferably consisting in: starch ethers, cellulose ethers and/or gums (e.g. Welan guar xanthane, succinoglycans), modified polysaccharides -preferably among modified starch ethers-, polyvinylic alcohols, polyacrylamides, sepiolites, and their mixes.

### • Defoamer/Antifoams

The possible defoamer is preferably chosen in the group comprising, more preferably consisting in: polyether polyols and mixes thereof.

### • Biocide

The possible biocide is preferably chosen in the group comprising, more preferably consisting in: mineral oxides like zinc oxide and mixes thereof.

### • Pigment

The possible pigment is preferably chosen in the group comprising, more preferably consisting in: TiO₂, iron oxide and mixes thereof.

### • Flame retardant

Flame retardant (or flame proof agent) makes it possible to increase the fire resistance and/or to shrink the speed of flame spreading of the composition.

### • Air-entraining agents

Air-entraining agents (surfactants) are advantageously chosen in the group comprising, more preferably consisting in, natural resins, sulfated or sulfonated compounds, synthetic detergents, organic fatty acids and their mixes, preferably in the group comprising, more preferably consisting in the lignosulfonates, the basic soaps of fatty acids and their mixes, and, more preferably in the group comprising, more preferably consisting in the sulfonate olefins, the sodium lauryl sulfate and their mixes.

### • Retarders

Retarders are advantageously chosen in the group comprising, more preferably consisting in tartric acid and its salts: sodium or potassium salts, citric acid and its salts: sodium (trisodic citrate) and their mixes.

In addition, other components may be:
- *Plasticizers*
- *Fibres*
- *Dispersion agents*
- *Wetting agents*
- *Polymeric resins*
- *Complexing agents*
- *Drying shrinkage reducing agents based on polyols.*

The total content of these optional other components in the dry mortar composition is preferably comprised between 0,1 dry wt% and 30 dry wt% by weight of the total weight of the binder composition, advantageously between 1 dry wt% and 20 dry wt%, and more advantageously between 3 dry wt% and 10 dry wt%.

### The wet industrial concrete or mortar composition

The invention also refers to a wet industrial concrete or mortar composition, in particular tile adhesive, repair mortars, screeds and mortars for floor covering comprising at least one aggregate, the binder composition described above and water.

In a specific embodiment, in the wet industrial concrete or mortar composition according to the invention the mass ratio water/binder composition is between 0,1 and 1,2, advantageously between 0,2 and 1, and more advantageously between 0,3 and 0,8.

### The process for preparing wet industrial concrete or mortar composition

The invention also relates to a process for preparing the wet industrial concrete or mortar composition described above comprising a step of mixing with water at least one aggregate and the binder composition described above, the binder composition being prepared before the mixing step or in situ during the mixing step from at least some of the different components of the binder composition taken separately and/or under the form of premix(es).

In other words, wet industrial concrete or mortar composition could be prepared by two distinct methods.

In a first method, the binder composition is prepared, and then mixed with the at least one aggregate. The dry industrial concrete or mortar composition is thereafter mixed with water.

In a second method, the wet industrial concrete or mortar composition is prepared by mixing in water each component of the binder composition and the aggregates.

According to the present disclosure, the term "mixing" has to be understood as any form of mixing.

In a preferred embodiment a part of the binder composition and at least a part of the water are mixed together prior to the mixing with the aggregate.

In a preferred embodiment, the process is implemented with a ratio water to binder composition comprised between 0,1 and 1,2, advantageously between 0.2 and 1, and more advantageously between 0.3 and 0.8.

### Hardened industrial mortar composition

The present invention also refers to hardened industrial concrete or mortar composition obtained from the wet mortar composition described above.

### Examples

### Example 1: the influence of the source of sulfate:

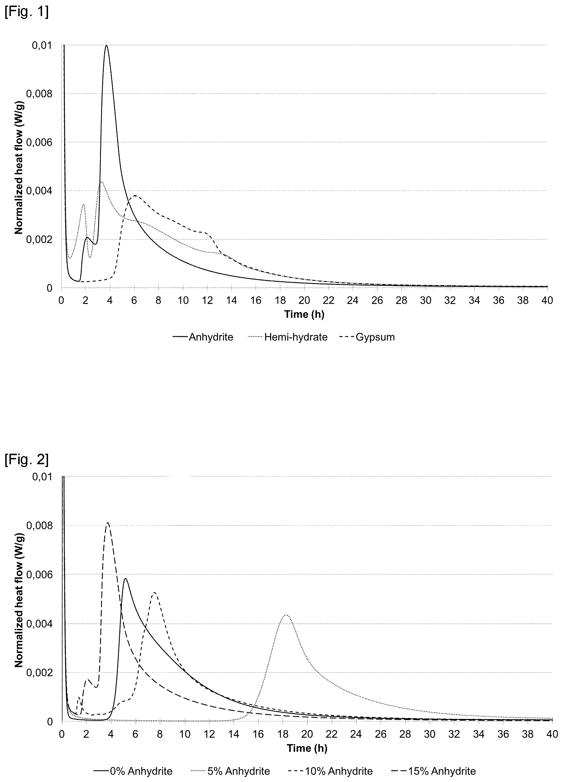

Three binder compositions have been prepared. The three binder compositions comprise 50 dry wt% of GGBS, 35 dry wt% of CAC and 15 dry wt% of a sulfate source, one contains anhydrite calcium sulfate, one contains hemi-hydrate calcium sulfate and one contains dihydrate calcium sulfate. These three binder compositions have then been mixed with water at a weight ratio water/binder composition of 0.6. The hydration kinetics of the three binder compositions have been measured, using isothermal calorimetry . It can be seen on figure 1 that the binder composition comprising anhydrite calcium sulfate present a very high and rapid hydration kinetics compared to the two others binder compositions. This was unexpected that anhydrite calcium sulfate presents such a higher hydration than hemihydrate and dihydrate.

### Example 2: the influence of the sulfate ratio

Four binder compositions have been prepared as reflected in table 1 below:

**Table 1**

| Components | B1 (counter example) | B2 | B3 | B4 |
|---|---|---|---|---|
| CAC (dry wt%) | 35 | 33.4 | 31.8 | 30.4 |
| GGBS (dry wt%) | 65 | 61.9 | 59.1 | 56.6 |
| Anhydrite calcium sulfate (dry wt%) | 0 | 4.7 | 9,1 | 13 |

These four binder compositions have then been mixed with water at a weight ratio water/binder composition of 0.6. These amounts are defined in order to maintain the same ratio GGBS/CAC regardless of anhydrite ratio. The heat flow of these four samples have been measured, using isothermal calorimetry. It can be seen from figure 2 that B1 shows a pic at around 5h. The presence of 5 dry wt% of anhydrite calcium sulfate delays the pic to around 19h. The presence of 10 dry wt% of anhydrite calcium sulfate delays the pic to around 8h. On the contrary, the presence of 15 dry wt% of anhydrite calcium sulfate allows to reduce the time and the pic is at around 4h, this was unexpected.

### Example 3: Hydration with sodium sulfate:

Five binder compositions have been prepared as reflected in table 2 below:

**Table 2**

| Components | B1 (counter example) | B5 | B6 | B7 | B8 |
|---|---|---|---|---|---|
| CAC (dry wt%) | 35 | 34.6 | 34.3 | 33.9 | 33.4 |
| GGBS (dry wt%) | 65 | 64.4 | 63.7 | 63.2 | 61.9 |
| Sodium sulfate (dry wt%) | 0 | 1 | 2 | 2.9 | 4.7 |

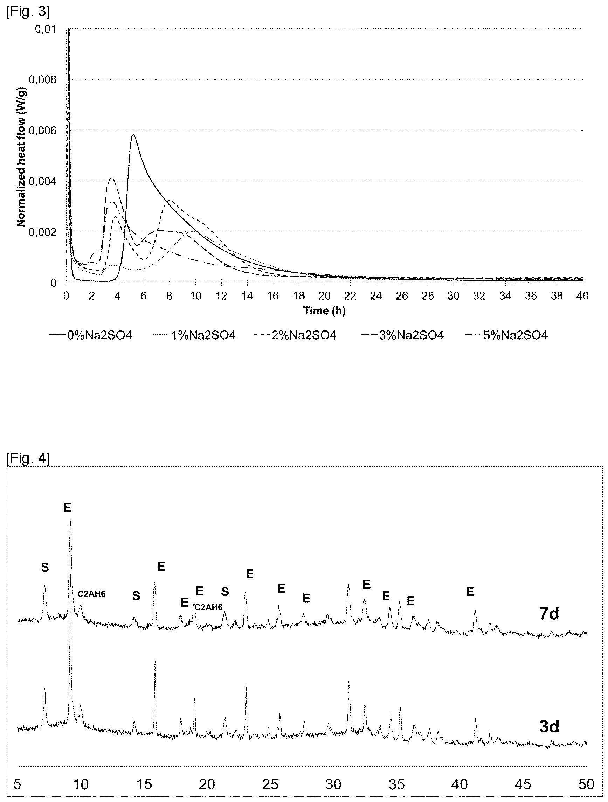

These five binder compositions have then been mixed with water at a weight ratio water/binder composition of 0.6. These amounts are defined in order to maintain the same ratio GGBS/CAC regardless of sodium sulfate ratio. The hydration kinetics of the five binder compositions have been measured, using isothermal calorimetry. It can be seen on figure 3 that B1 shows a pic at around 5h. The presence of 1wt% of sodium sulfate delays the pic to around 10h. The presence of 2 dry wt% of sodium sulfate delays the pic to around 8h. On the contrary, the presence of 3 dry wt% or 5 dry wt% of sodium sulfate allows to reduce the time and the pic is at around 3h30, this was unexpected.

### Example 4: evidence of the presence of both ettringite and stratlingite:

Four binder compositions according to the invention have been prepared as reflected in table 3 below:

**Table 3**

| Components | B9 | B10 | B11 | B12 (counter example) |
|---|---|---|---|---|
| CAC (dry wt%) | 30 | 40 | 33.9 | 35 |
| GGBS (dry wt%) | 55 | 45 | 63.2 | 65 |
| Anhydrite calcium sulfate (dry wt%) | 15 | 15 | 0 | 0 |
| Sodium sulfate (dry wt%) | 0 | 0 | 2.9 | 0 |

These four binders have then been mixed with water at a weight ratio water/binder composition of 0.6.

After 3 days and 7 days the hardened product obtained from B9 has been analyzed by x-ray diffraction. As can be seen from figure 4, both stratlingite (s) and ettringite (E) have been formed.

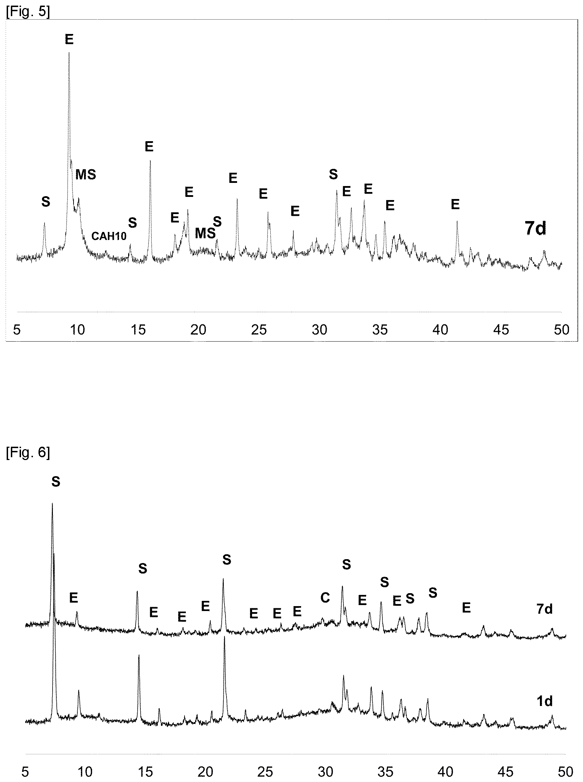

After 7 days the hardened product obtained from B10 has been analyzed by x-ray diffraction. As can be seen from figure 5, both stratlingite (s) and ettringite (E) have been formed.

After 3 days and 7 days the hardened product obtained from B11 has been analyzed by x-ray diffraction. As can be seen from figure 6, both stratlingite (s) and ettringite (E) have been formed.

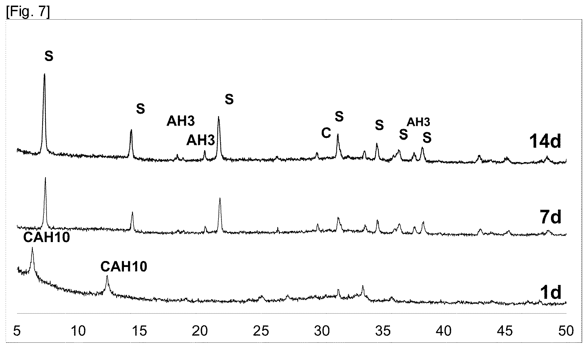

After 1 day, 7 days and 14 days the hardened product obtained from B12 has been analyzed by X-ray diffraction. As can be seen from figure 7, only stratlingite (s) has been formed.

Moreover, it can be noted from figures 4, 5 and 6 that stratlingite phase appears at the early stage, showing the reactivity of the GGBS.

### Example 5: Fast setting tile adhesive based on B10:

A tile adhesive has been prepared by mixing sand, binder composition B10 and other components as reflected in table 4 below and mixing with 24 wt% of water:

**Table 4**

| Components | Percentage by dry weight |
|---|---|
| Sand | 52.1 |
| Filler | 10 |
| GGBS | 14 |
| CAC | 15.75 |
| Anhydrite | 5.25 |
| Redispersable powder | 2.5 |
| Cellulose ether | 0.3 |
| Lithium Carbonate | 0.05 |
| Trisodic citrate | 0.05 |

The adhesion strength has been measured according to the standard EN12004 for fast setting tile adhesive. The tests were carried out after 6 hours, 7 days, 14 days and 28 days, the results are set forth in table 5 below:

**Table 5**

| Time | 6 h | 7 d | 14 d | 28 d |
|---|---|---|---|---|
| Adhesion strength (MPa) | 0,5 | 1,06 | 1,1 | 1,4 |

The tile adhesive according to the invention is a fast setting tile adhesive according to standard EN12004 since it presents an adhesion strength of 0.5 MPa after 6 hours and above 1 after 28 days. It can be noted that the threshold of 1 MPa is passed after 7 days.

### Example 6: Self-leveling underlayment based on B10

A self-leveling underlayment has been prepared by mixing sand, binder composition B10 and other components as reflected in table 6 below and mixing with 22 wt% of water:

**Table 6**

| Component | Percentage by dry weight |
|---|---|
| Sand | 48,53 |
| Filler | 15,00 |
| GGBS | 14,00 |
| CAC | 15,75 |
| Anhydrite | 5,25 |
| Redispersable powder | 1,00 |
| Cellulose ether | 0,12 |
| de-foaming agent | 0,10 |
| PCE | 0,14 |
| Tartaric acid | 0,03 |
| Lithium Carbonate | 0,08 |

The compressive strength has been measured according to standard **EN 13813,** after 7 days, 14 days and 28 days, the results are set forth in table 7 below:

**Table 7**

| Time | 7 d | 14 d | 28 d |
|---|---|---|---|
| Compressive strength (MPa) | 14 | 18.5 | 19.5 |

The self-leveling underlayment according to the invention presents the compressive strength for a self-leveling underlayment according to standard **EN 13813.**

## Claims

1. Ettringitic and stratlingitic binder composition comprising:
A) Crystalline calcium aluminate Cement (CAC),
B) Ground Granulated Blast Furnace Slag (GGBS), and
C) Sulfate source selected from the group consisting of Anhydrite calcium sulfate (AC$) and/or alkali sulfate (A$).

2. Ettringitic and stratlingitic binder composition according to claim 1, wherein the quantity of CAC is between 5% dry wt and 60% dry wt advantageously between 10% dry wt and 55% dry wt, and more advantageously between 15% dry wt and 45% dry wt.

3. Ettringitic and stratlingitic binder composition according to any one of the preceding claims, wherein the quantity of GGBS is between 5% dry wt and 95% dry wt, advantageously between 15% dry wt and 70% dry wt, and more advantageously between 30% dry wt and 65% dry wt.

4. Ettringitic and stratlingitic binder composition according to any one of the preceding claims, wherein the quantity of AC$ is between 0,1 % dry wt and 30% dry wt, advantageously between 1% dry wt and 20% dry wt, and more advantageously between 5% dry wt and 15% dry wt.

5. Ettringitic and stratlingitic binder composition according to any one of the preceding claims, wherein the quantity of A$ is between 0,1% dry wt and 5% dry wt, advantageously between 1% dry wt and 4.5% dry wt, and more advantageously between 2% dry wt and 4% dry wt.

6. Ettringitic and stratlingitic binder composition according to any one of claims 5 and 6, wherein, the alkali sulfate is selected from the group consisting of sodium sulfate, lithium sulfate and potassium sulfate, preferably the alkali sulfate is sodium sulfate.

7. Ettringitic and stratlingitic binder composition according to any one of the preceding claims, wherein the content of Ordinary Portland Cement (OPC) is less than or equal 1 dry wt%.

8. Ettringitic and stratlingitic binder composition according to any one of the preceding claims, wherein it further comprises at least one additive selected from the group comprising water reducing polymers, filler, supplementary cementitious material, water retention agent, rheological agent, defoamer/antifoams, biocide, pigment, flame retardant, air-entraining agents and retarders.

9. Dry industrial mortar composition or concrete composition, in particular tile adhesive, repair mortars, screeds and mortars for floor covering comprising at least one aggregate and the binder composition according to any one of claims 1 to 8.

10. Wet industrial mortar composition or concrete composition in particular tile adhesive, repair mortars, screeds and mortars for floor covering comprising at least one aggregate, the binder composition according to any one of claims 1 to 8 and water.

11. Hardened industrial mortar composition or concrete composition obtained from the wet industrial mortar composition or concrete composition according to claim 10.

12. Process for preparing the wet industrial mortar composition or concrete composition according to claim 10 comprising a step of mixing with water, at least one aggregate and the binder composition according to any one of claims 1 to 8, the binder composition being prepared before the mixing step or in situ during the mixing step from at least some of the different components of the binder composition taken separately and/or under the form of premix(es).

13. Process according to claim 12, wherein the ratio water to binder composition is comprised between 0,1 and 1,2, advantageously between 0,2 and 1, and more advantageously between 0,3 and 0,8.
